# EUROPEAN PATENT APPLICATION

(11) **EP 4 822 301 A1**
(43) Date of publication of application: **14.10.2026**
(21) Application number: 26169350.1
(22) Date of filing: 31.03.2026
(51) Int. Cl.: G01D 5/48

(54) **MAGNETOSTRICTIVE VARIABLE DIFFERENTIAL TRANSFORMERS (MVDT) SENSOR PRINCIPLE AND APPARATUS, SENSOR ARRAY, SENSOR SYSTEM AND POSITION MEASUREMENT APPLICATIONS**

(30) Priority: 11.04.2025 DE 102025114485
(71) Applicant: Temposonics GmbH & Co. KG, 58513 Lüdenscheid (DE)
(72) Inventor: Weyergraf, Anselm, 44287 Dortmund (DE)
(74) Representative: Meissner Bolte Partnerschaft mbB

(57) **Abstract**

The present invention pertains to a sensor element (1) for detecting a position of a magnet (2) relative to the sensor element (1), the sensor element (1) comprising a magnetostrictive conductor (10), preferably a magnetostrictive wire, adjacent to which a magnet (2) is placeable; a current pulse generator (11) which is configured to generate a current pulse in the magnetostrictive conductor (10); one or more coils (12a, 12b, 12c) that are arranged adjacent to the magnetostrictive conductor (10) or wound around the magnetostrictive conductor (10); and a signal processing unit (13) configured to measure a respective voltage signal of the one or more coils (12a, 12b, 12c), the voltage signal being triggered by the current pulse in the magnetostrictive conductor (10). The invention further specifies a sensor element array, a method for determining the position of a magnet and a corresponding calibration method.

## Description

The present invention pertains to the field of position measurement sensors and discloses a novel approach to position determination. More particularly, the present invention pertains to a sensor or sensor element according to the subject-matter of claim 1, a sensor (element) array according to the subject-matter of claim 9, a sensor system according to the subject-matter of claim 11, a method according to the subject-matter of claim 12 and a calibration method according to the subject-matter of claim 15.

Linear Variable Differential Transformers (LVDTs) have long been established as a reliable and precise solution for displacement measurement in a wide range of applications. Their popularity stems from several key advantages, including high accuracy, infinite resolution, and frictionless operation. LVDTs operate on a contactless principle, eliminating wear and tear while ensuring exceptional repeatability and longevity. Additionally, their robust design makes them suitable for harsh environments, including those with extreme temperatures, vibrations, or electromagnetic interference. These attributes have established LVDTs as a standard choice in industries such as aerospace, automotive, industrial automation, power generation, medical devices, and scientific research. For example, they are extensively used for position sensing in aircraft control systems, robotic surgical equipment, turbine valve monitoring, and quality assurance systems in manufacturing.

The Linear Variable Differential Transformer (LVDT) operates on the same physical principles as a transformer, relying on electromagnetic induction to measure linear displacement. The sensor comprises a primary coil and two secondary coils displaced relative to each other along a displacement direction, with a ferromagnetic core that is movable in the displacement direction positioned in the vicinity of the coils. The primary coil is energized with an AC voltage of constant amplitude, thus generating a time-variable magnetic field that induces voltages in the secondary coils. The differential voltage between the secondary coils forms the output signal of the LVDT sensor.

When the ferromagnetic core is centred about the secondary coils, the respective magnetic coupling between the primary coil and both secondary coils is equal, resulting in zero output voltage. As the ferromagnetic core moves along the displacement direction, the magnetic flux linkage changes asymmetrically between the two secondary coils. This causes one secondary voltage to increase while the other decreases, producing an output voltage proportional to the core's displacement. The phase of this output voltage indicates the direction of movement relative to the zero position. This transformer-like behaviour ensures high linearity and precision in displacement measurement while maintaining frictionless operation due to the absence of physical contact between components.

Despite their widespread adoption and proven reliability, LVDT sensors are not without limitations. Their performance can be constrained by factors such as sensitivity to stray magnetic fields, the need for complex signal conditioning electronics, and susceptibility to errors caused by core misalignment or temperature-induced material expansion. Furthermore, the size of LVDT sensors can pose integration challenges in applications requiring compact or miniaturized systems.

In light of the above, it is an object of the present invention to mitigate some or all of the above-described shortcomings of LVDT sensors. In particular, it is an object of the present invention to enable the position measurement of a magnet with a simple and robust construction and concept that has a small footprint and is simple to manufacture in a cost-effective manner, whilst maintaining the above-mentioned advantages of LVDTs, particularly their robustness to varying ambient conditions and the low wear due to contactless measurement.

The above object is solved by a sensor element according to the subject-matter of claim 1, a sensor element array according to the subject-matter of claim 8, a sensor system according to the subject-matter of claim 10, and a method according to the subject-matter of claim 12. Preferred modifications are indicated in the dependent claims.

The problem of the present invention is particularly solved by a sensor element for detecting a position of a magnet relative to the sensor element. The sensor element comprises a magnetostrictive conductor, adjacent to which a magnet is placeable; a current pulse generator which is configured to generate a current pulse in the magnetostrictive conductor; one or more coils that are arranged adjacent to the magnetostrictive conductor or wound around the magnetostrictive conductor; and a signal processing unit configured to measure a respective voltage signal of the one or more coils, the voltage signal being triggered by the current pulse in the magnetostrictive conductor.

The present invention introduces a completely novel approach to positional measurements that is based on a previously unused operational principle. Similar to LVDT, the determination of the position of a magnet is determined relative to the position of the coils in the sensor element that are wound around the magnetostrictive wire or arranged in its vicinity. Instead of an energized primary coil as used in LVDT sensors, however, the magnetostrictive conductor around which the coils are wound (or adjacent to which the coils are arranged) serves as trigger for the measurement when a current pulse is generated therein. The moveable magnet that is placed in the vicinity of the sensor element, particularly in the vicinity of the magnetostrictive conductor with the coils, induces a voltage signal in the coils each time a current pulse is sent through the magnetostrictive conductor. The phase and amplitude of the voltage signals in the coils depends on the position of the magnet relative to the respective coil. From the voltage signal, the position of the magnet relative to the coils, and thus, the position relative to the sensor element, can be determined.

A plurality of sensor elements according to the present invention can be combined in a sensor, but it is also possible to configure a sensor comprising only one sensor element. In the following, the terms "sensor" and "sensor element" may be used interchangeably, but it is noted that a sensor in accordance with the present invention may comprise one or more of the sensor elements described herein.

In comparison to LVDT sensors, the operational principle of the sensor according to the present invention could be characterized as a magnetostrictive variable differential (or distance) transformer, MVDT. The magnetostrictive conductor represents essentially a single linear winding of the primary side of a transformer. The coils wound on the magnetostrictive conductor represent the secondary side of the transformer. During the current pulse in the magnetostrictive conductor, the magnet induces a magnetostrictive effect on the magnetostrictive conductor which influences its permeability and thus the coupling into the coils. That a magnetostrictive material is required for the conductor has been checked by using either high permeable material with literally zero magnetostriction (µ-Metal) or a non-ferromagnetic steel material. As both variants do not induce a variable signal into the coils, the use of a magnetostrictive conductor is essential for the operation of the inventive sensor.

The magnetostrictive conductor can be made of any magnetostrictive material, such as iron (Fe), nickel (Ni) or magnetostrictive alloys such as Terfenol-D (TbₓDy₁₋ₓFe2, x ~ 0.3), Fe-Ga alloys such as Galfenol or cobalt ferrite (CoFe₂O₄). The geometry of the magnetostrictive conductor is not particularly limited. The geometry determines a measurement direction for the positional measurements, because the coils are wound on the magnetostrictive conductor. For the measurement of linear displacements, a straight magnetostrictive conductor is preferable. For a 2D position measurement, an array of conductors is more suitable, as will be explained below. The magnetostrictive conductor, in cross-section, may be massive, e.g. constituted by a wire with a diameter of 0.4 mm or 1-2 mm with circular or polygonal cross-section. Alternatively, the magnetostrictive conductor may be configured as a waveguide with a hollow core and a circular or polygonal cross-section.

The coils may be made of any metal typically used for winding coils, e.g., copper (Cu). Preferably, enamelled wires (preferably enamelled copper wires) are used. The coils may be wound directly on the magnetostrictive conductor, be arranged such that the magnetostrictive conductor runs through the coils, or be arranged adjacent to the magnetostrictive conductor. As elaborated above, the present invention also comprises embodiments in which the coils are not directly wound on the magnetostrictive conductor but are arranged adjacent to the magnetostrictive conductor. Winding the coils on the magnetostrictive conductor may be advantageous in terms of signal quality and mechanical stability of the sensor.

The current pulse used to trigger a measurement in the sensor (element) is not particularly limited and may be optimized in dependence of the magnetostrictive conductor's material and geometry, as well as the configuration of the coils (material, number of turns). For a magnetostrictive wire with a diameter of 0.4 mm and copper coils with 1500 turns, a current pulse with an amplitude of 2A and 1.6 µs pulse duration has proven an effective choice.

The magnet whose position is to be determined is not particularly limited and can be constituted by a permanent magnet or an electromagnet.

The sensor (element) according to the invention enables to determine the position of a magnet placed adjacent to the sensor with high accuracy. The known advantages of LVDT sensors - particularly the high robustness to varying ambient conditions and the possibility of contactless measurement - are also obtainable with the inventive sensor. The inventive sensor (element) is particularly useful for high temperature environments. Furthermore, the inventive sensor features a conceptually and structurally simple design - it only requires the provision of a magnetostrictive conductor relative to which coils are arranged in defined positions as principal sensor element. The coils can be fixated on the magnetostrictive conductor by gluing, potting or casting. Furthermore, a sensor (element) with very low space requirement can be realized by using a thin wire as magnetostrictive conductor and winding the coils directly onto the wire. This yields a very compact, low-diameter sensor (element) with extremely small dimensions in directions perpendicular to the extension direction of the magnetostrictive conductor.

The inventive sensor (element) relies on the use of a magnetostrictive conductor, which are also employed in magnetostrictive sensors. The inventive sensor (element) also has obvious advantages over this type of sensor. In contrast to magnetostrictive sensors, the position detection does not rely on acoustic waves propagating along the magnetostrictive conductor. Thus, the magnetostrictive conductor can be touched without influence on signal quality, which improves the robustness of the sensor (element) over that of magnetostrictive sensors with respect to shock and vibrations, thus widening the application scope of the inventive sensor (element).

Preferably, the magnetostrictive conductor with the coils is mechanically fixated, e.g. by potting or casting in adequate material such as a synthetic resin. This ensures that the relative positioning of the magnetostrictive conductor and the coils is fixed, thus ensuring measurement accuracy and reliability.

Preferably, the signal processing unit is configured to determine the position of the magnet relative to the sensor (element), in particular relative to the coils, based on the measured voltage signals of the coils. In this aspect, the present invention is also clearly distinguishable from linear magnetostrictive sensors, in which the position of a position magnet along a linear waveguide is measured by applying an interrogation pulse to the waveguide, which induces torsional strain in the waveguide. This mechanical pulse travels down the waveguide as an ultrasonic wave, moving at approximately 2850 m/s and is detected by a signal converter at a predetermined location. Based on the time difference between the interrogation pulse and the detection of the mechanical pulse, the distance between the position magnet and the signal converter is determined.

In contrast, the signal processing unit of the present invention is configured to determine the position of the magnet relative to the sensor (element), in particular relative to the coils, based on the measured voltage signals of the coils without taking into consideration a time difference between the current pulse and the voltage signals of the coils. The processing unit is configured to measure the voltage signals of the coils concurrently with the current pulse. In other words, the signal processing unit is configured to determine the position of the magnet relative to the sensor (element), in particular relative to the coils, without performing a time-of-flight measurement. The measurement of the voltage signals of the coils is performed at the same time as the generation of the current pulse. The time delay between the current pulse and the voltage signals of the coils is not taken into consideration for determining the position of the magnet relative to the sensor (element). The position of the magnet relative to the sensor (element) can thus be determined in real time - the current pulse instantaneously triggers a voltage signal at the coils that can be measured concurrently with the current pulse generation, without the need for determining a time difference between the current pulse and the voltage signal at the coils to determine the magnet's position.

As explained above, the voltage signal in the individual coils depends on the relative position between the magnet and the respective coil. Generally speaking, the voltage signal amplitude increases with decreasing distance between coil and magnet. The phase of the signal depends on the side of the coil the magnet is located at. From the amplitudes and phases of the voltage signals output by the coils the position of the magnet relative to the coils and, thus, the position of the magnet relative to the sensor can be determined. With the measurement principle of the present invention, it is also possible to detect the position of multiple magnets with one sensor.

Since the determination of the magnet's position is based on an evaluation of signal amplitudes rather than time measurements (like in a classical magnetostrictive sensor), the signal evaluation is simplified and the measurement accuracy improved. Since the accuracy of the measurement of the inventive sensor depends mainly on the distance between the magnet and the closest coils on the magnetostrictive conductor, signal quality does not deteriorate with higher length of the sensor, but can be maintained independent of sensor length.

It is further preferred that the pulse generator is configured to generate a current pulse with a duration of 0.5 µs to 5 µs, and/or an amplitude of 1 A to 5 A. The optimization of current pulse duration and amplitude in dependence of the magnetostrictive conductor's and coil's properties yields optimized voltage signals and can thus help to increase detection accuracy and reliability.

According to a further (preferred) embodiment, a distance between adjacent coils on the magnetostrictive conductor is 60 mm or less, preferably 40 mm or less. If the distance between adjacent coils is chosen too large, the signal may be too low when the magnet is positioned between the coils. A distance of 60 mm or less has proven a suitable choice to ensure sufficient signal quality whilst optimizing the number of coils. The distance between adjacent coils may depend on the physical length of the individual coil. It has been observed that shorter coils exhibit considerable overmeasurement ranges. For example, a coil of 25 mm length still produces a usable signal if the magnet is placed at a position 12 mm beyond the end of the coil. Higher turn numbers generate stronger signals but exhibit a smaller overmeasurement range. Thus, the shorter the coil is, the larger the distance between adjacent coils can be chosen.

In an exemplary embodiment suitable for a measurement range of approximately 85 mm, two coils with a length of 25 mm are wound on the magnetostrictive conductor at a distance of 10 mm.

According to a further embodiment, the coils may be overlapping. This corresponds to a negative distance between adjacent coils. This embodiment is particularly suitable when employing relatively long coils that exhibit a small overmeasurement range.

Preferably, the one or more coils are wound directly on the magnetostrictive conductor. As stated previously, it is also possible to use coils with a larger cross-sectional diameter than that of the magnetostrictive conductor, but in terms of mechanical stability and ease of manufacturing, a direct winding of the coils on the magnetostrictive conductor is preferred.

It is further preferable that the one or more coils contain 5 turns or more, more preferably 10 turns or more, more preferably 100 turns or more, more preferably 1500 turns or more. According to a particularly preferred embodiment, the number of turns is between 1000 and 2000. A higher number of turns yields a higher voltage signal, but increases production effort. Lower numbers of turns can be compensated with a higher amplitude of the current pulse used to trigger the measurement. Coils with 15 turns have been successfully used with current pulses of moderate amplitude, and yielded a satisfactory voltage signal quality.

According to a further (preferred) embodiment, a dampening resistor is connected in parallel to at least one, preferably to each of, the coils. The voltage signal output by the coils in response to the current pulse is a damped oscillation. Dampening resistors connected in parallel with the coils can dampen these oscillations, so that the output voltage signal of the coils is transformed to a single si-nusodial shape. This simplifies the evaluation of the voltage signals output by the coils. The resistance of the dampening resistor should be adapted to the properties of the coil. For copper coils with 1800 turns, dampening resistors with a resistance of 18 kΩ have been proven useful.

It is further preferable that the sensor (element) comprises a guiding element along which the magnet is movable in a guided manner, the guiding element being configured and arranged such that the magnet is movable in a direction essentially parallel, preferably parallel, to the magnetostrictive conductor. This facilitates displacement measurements and increases the accuracy. The guiding element can be configured as a hollow structure in which the magnet is restricted to a linear movement in a direction (essentially) parallel to the extension direction of the magnetostrictive conductor. Alternatively, the magnet can be provided in a ring shape, which allows the use of a rod as guiding element on which the magnet is held.

According to preferred embodiments, the magnetostrictive conductor is arranged or provided in a straight or bent, preferably circular segment, configuration. The use of a straight magnetostrictive conductor allows the measurement of linear displacements, whilst the use of a bent magnetostrictive conductor enables the use of the inventive sensor (element) as rotary encoder.

The object of the present invention is further solved by a sensor (element) array for detecting a position of a magnet relative to the sensor element array. The sensor element array comprises a plurality of magnetostrictive conductors, which are preferably arranged in parallel to each other or in an array, adjacent to which a magnet is placeable; a current pulse generator which is configured to generate a current pulse in the magnetostrictive conductors; a plurality of coils which are arranged adjacent to the magnetostrictive conductors or wound around the magnetostrictive conductors, wherein each magnetostrictive conductor comprises at least one coil; and a signal processing unit configured to measure a respective voltage signal of the plurality of coils, the voltage signal being triggered by the current pulse in the magnetostrictive conductors.

The inventive sensor element array relies on the same operational principle as the inventive sensor (element) described above. In addition, the sensor element array allows the determination of a 2D position and is not limited to the measurement of linear displacements.

As with the sensor element, it is understood that a plurality of sensor elements arrays according to the present invention can be combined in a sensor or a sensor array, but it is also possible to configure a sensor array comprising only one sensor element array. In the following, the terms "sensor array" and "sensor element array" may be used interchangeably, but it is noted that a sensor array in accordance with the present invention may comprise one or more of the sensor element arrays described herein. The distinction is made where necessary. The technical advantages achievable with the sensor of the present invention are also achievable with the sensor (element) array described above. Aspects, features and advantages described in the context of the inventive sensor are also applicable to the inventive sensor array, and vice versa.

Preferably, the signal processing unit is configured to determine the position of the magnet relative to the sensor array, in particular relative to the coils, based on the measured voltage signals of the coils. As with the inventive sensor, the amplitude of the voltage signals output by the coils depends on the distance between the magnet and the coils. Thus, the position of the magnet relative to the coils of the sensor array can thus be determined based on the voltage signals output by the coils.

Preferably, the array comprising the magnetostrictive conductors and coils can be mechanically fixated, e.g. by potting or casting it in adequate material such as a synthetic resin. It is noted that, according to preferred embodiments, the components of an inventive sensor (element) - i.e. a sensor (element) not forming an array - can also be mechanically fixated by potting or casting in adequate material such as synthetic resin.

The object of the present invention is further solved by a sensor system for detecting a position of a magnet relative to a sensor or a sensor array, the system comprising a sensor as described above, or a sensor array as described above, and one mor more magnets that is/are disposable in the vicinity of the sensor or the sensor array and whose position is detectable with the sensor or the sensor array.

As noted before, the inventive sensor and sensor array are suitable to measure the position of one magnet, but are also configured to measure the position of multiple magnets. A sensor system comprising the inventive sensor or sensor array and one or more magnets achieves all the advantages described above with reference to the inventive sensor and sensor array.

The object of the present invention is further solved by a method for determining a position of a magnet relative to a sensor as described above, or relative to a sensor array as described above, the method comprising:
- placing a magnet in the vicinity of the sensor or the sensor array, particularly in the vicinity of the magnetostrictive conductor or the magnetostrictive conductors;
- generating a current pulse in the magnetostrictive conductor or in the magnetostrictive conductors;
- measuring a respective voltage signal of the coils of the sensor or the coils of the sensor array; and
- determining the position of the magnet relative to the sensor or the sensor array based on the measured voltage signals of the coils.

Preferably, the determination of the position of the magnet takes into account the amplitude, the phase, the amplitude difference, and/or the phase difference of the measured voltage signals of the coils. This allows for a highly precise and reliable measurement of the magnet's (or the magnets') position relative to the sensor or sensor array.

As already emphasized with respect to the inventive sensor (element), determining the position of the magnet relative to the sensor or the sensor array is based on the measured voltage signals of the coils without taking into consideration a time difference between the current pulse and the voltage signals of the coils. the measuring of a respective voltage signal of the coils of the sensor or the coils of the sensor is performed concurrently with the generating of the current pulse. In other words, the position of the magnet relative to the sensor or the sensor array is determined without performing a time-of-flight measurement. The time delay between the current pulse and the voltage signals of the coils is not taken into consideration for determining the position of the magnet relative to the sensor or sensor array.

For the triggering of a position measurement, a current pulse with a duration of 0.5 µs to 5 µs, and/or an amplitude of 1 A to 5 A may be used. The current pulse may either be a single peak DC pulse, or an AC pulse with one positive and negative peak, preferably of identical absolute amplitude and duration. The current pulse may be applied periodically for a continuous position determination, preferably at a frequency of 10 Hz to 500 kHz. Measuring two positions of a magnet at a predetermined time interval by applying two current pulses with predetermined time interval enables the measurement of the magnet's velocity.The technical advantages achievable with the sensor, sensor array and sensor system of the present invention as described above are also achievable with the method specified above. Aspects, features and advantages described in the context of the inventive sensor, sensor array and sensor system are also applicable to the inventive method, and vice versa.

In the context of the present invention, a method for calibrating a sensor (element) is further proposed. The calibrating method can be applied to any of the sensor (element)s, sensor array (element)s and sensor systems described above. The calibration method serves to establish a reference position for a coil of the sensor (element). The method comprises measuring the inductance of a coil of a sensor (element), sensor array (element) or sensor system described above, whilst translating/moving a magnet along the magnetostrictive conductor such that it passes the coil. A position of the magnet at which a minimum inductance of the coil is measured is determined as a reference position of the coil on the magnetostrictive conductor. Preferably, the calibration is performed for every coil of the sensor (element), sensor array (element) or sensor system, in order to achieve a complete calibration.

The above and further features and advantages of the present invention will become more readily apparent from the following description of preferred embodiments of the invention with reference to the accompanying drawings, in which:
- Fig. 1: is a schematic illustration of the physical principle underlying the present invention;
- Fig. 2: is a schematic illustration of the principal configuration of a sensor (element) according to an embodiment of the present invention;
- Fig. 3a-3c: schematically illustrate the operational principle of a sensor system according to an embodiment of the present invention, which enables the detection of the position of a magnet;
- Fig. 4: illustrates a configuration of a sensor (element) with a bent configuration;
- Fig. 5: illustrates a method for calibrating a coil of a sensor (element) according to the present invention;
- Fig. 6: schematically depicts a sensor array (element) according to an embodiment of the present invention;
- Fig. 7-8: illustrate variations of the sensor array (element) of Fig. 6 in which the coils are provided in a planar configuration.

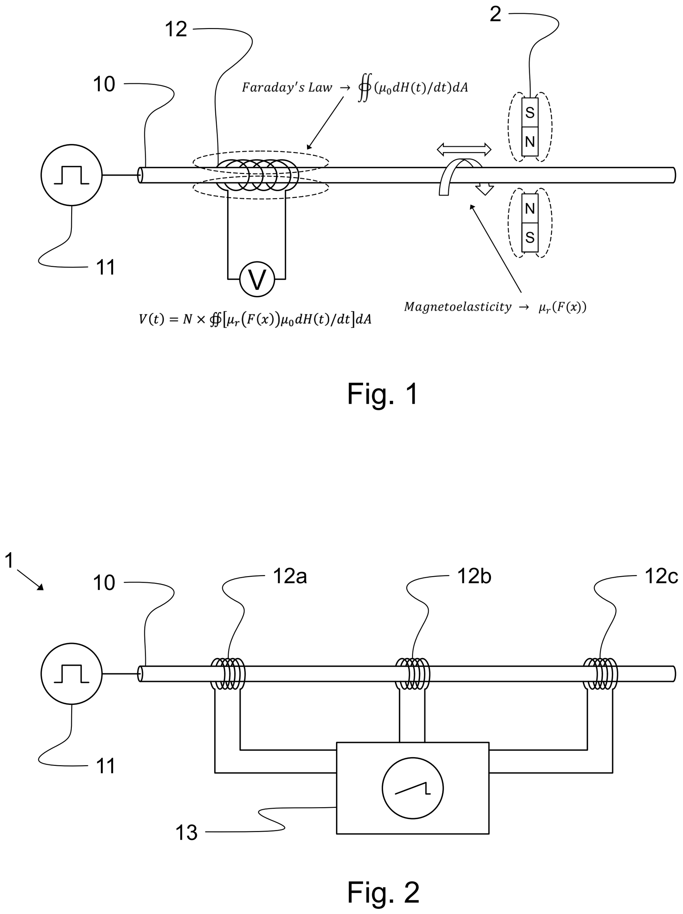

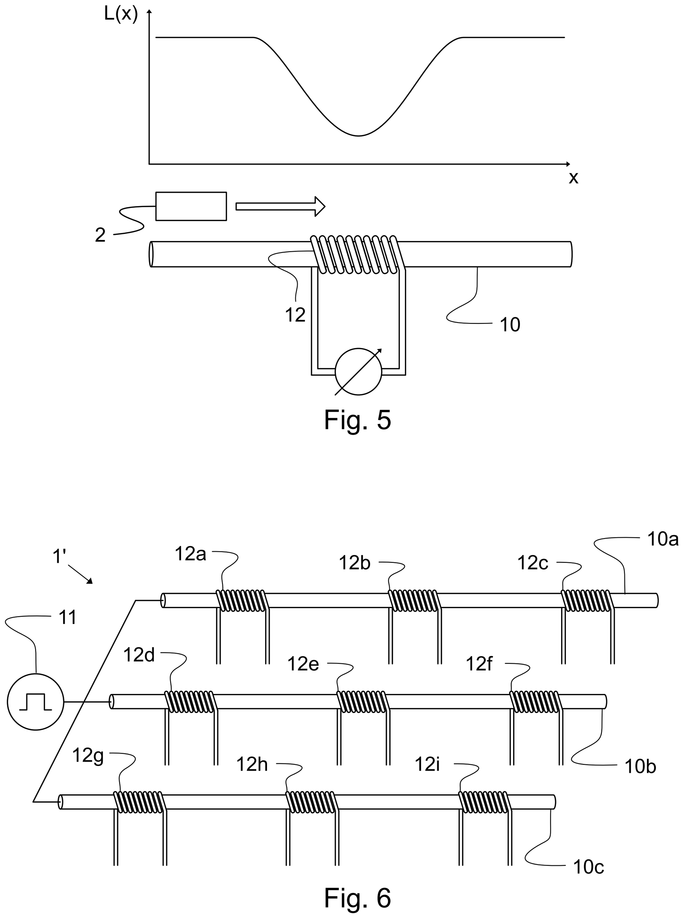

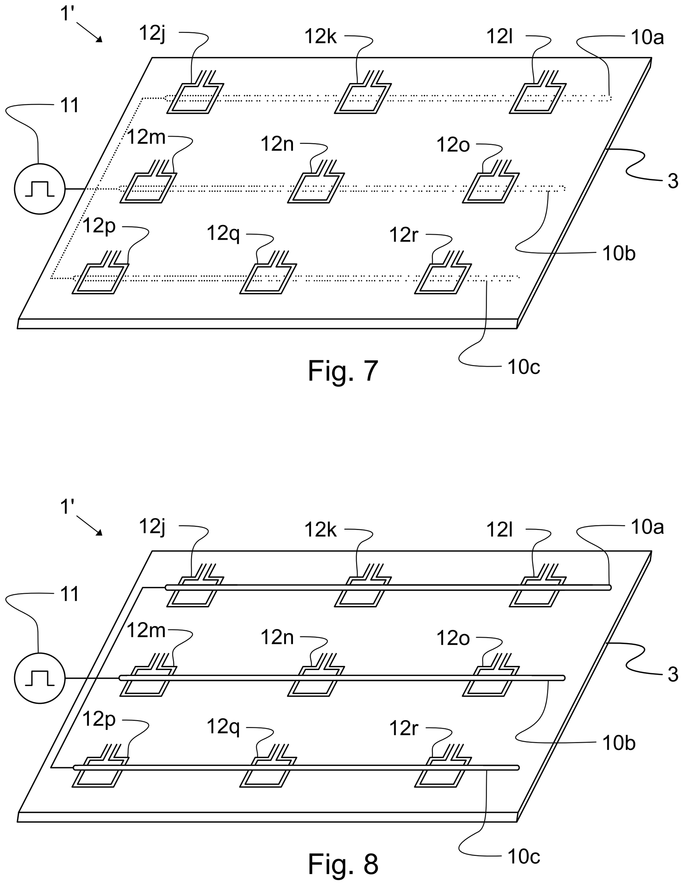

Fig. 1 is a schematic illustration of the physical principle underlying the present invention. Shown is a conductor 10 made of a magnetostrictive material. A magnet 2 is placed in the vicinity of the magnetostrictive conductor 10 at a given location. Adjacent to the magnetostrictive conductor 10, a coil 12 is arranged. In Fig. 1, the coil 12 is wound around the conductor 10, so that the magnetostrictive conductor 10 passes through the coil 12. The operational principle of the invention can also be exploited if the coil 12 is arranged adjacent to the magnetostrictive conductor 12, as shown, e.g., in the embodiments of Fig. 6 and 7.

A current pulse generator 11 is connected to the magnetostrictive conductor 10. The current pulse generator 11 is adapted to apply a current pulse to the magnetostrictive conductor 10. As shown in Fig. 1, a voltage V induced in the coil 12 can be measured.

When a current pulse is applied to the magnetostrictive conductor 10, a voltage is induced in the coil 12 in accordance with Faraday's Law. In this situation, the system resembles a transformer, with the magnetostrictive conductor acting as the primary side of a transformer with a single winding.

With the presence of the magnet 2, the application of the current pulse to the magnetostrictive conductor further leads to the induction of mechanical stress in the magnetostrictive conductor, as illustrated by the two broad arrows in Fig. 1. This mechanical deformation leads to a modification of the magnetic permeability of the magnetostrictive conductor 10, which yields an additional contribution to the induced voltage V, as represented by the formula in Fig. 1: $V \left(t\right) = N \times ∯ \left[{μ}_{r}\left(F\left(x\right)\right){μ}_{0}dH\left(t\right)/dt\right] dA$ with N being the number of windings of the coil 12, *µᵣ*(*F*(*x*)) being the contribution of the permeability change induced by the magnetostrictive coupling of the **magnet 2 which** depends on the position x of the magnet 2 relative to the coil 12, and *µ*₀*dH*(*t*)/*dt* representing the induction contribution obeying Faraday's Law. The contribution of the permeability change induced by the magnetostrictive coupling of the magnet 2 (and thus the modulation of the induced voltage) is dependent on the distance between the magnet 2 and the coil 12. It can thus be exploited to derive the distance between the magnet 2 and the coil 12 based on a measurement of the voltage signal induced in the coil 12, which is triggered by the current pulse in the magnetostrictive conductor 10.

Fig. 2 schematically illustrates the configuration of a sensor (element) 1 according to an embodiment of the present invention, which is based on the operational principle described above. The sensor 1 is configured to detect the position of a magnet (not shown in Fig. 2) relative to the sensor 1. As principal components, the sensor comprises a magnetostrictive conductor 10, on which a plurality of coils 12a, 12b, 12c are located. The coils 12a, 12b, 12c are wound around the magnetostrictive conductor 10. The sensor 1 enables the determination of the position of a magnet relative to the coils 12a, 12b, 12c. It should be noted that the presence of multiple coils 12a, 12b, 12c serves to clearly illustrate the scope of the invention. A sensor (element) 1 with only one coil is also fully functional and represents an embodiment of the present invention. The number of coils depends on the required stroke length of the sensor (element) 1.

The magnetostrictive conductor 10 may be provided in the form of a wire, preferably with a circular or polygonal cross-section, with a preferable diameter of 0.1 mm - 1 mm. Alternatively, the magnetostrictive conductor 10 may be provided in a hollow, waveguide-like configuration. For the operability of the sensor 1, the magnetostrictive property of the material constituting the magnetostrictive conductor 10 is decisive.

The coils 12a, 12b, 12c are wound on the magnetostrictive conductor. In the embodiment of Fig. 2, the cross-section of the coils 12a, 12b, 12c is bigger than the cross-section of the magnetostrictive conductor 10, so that the magnetostrictive conductor 10 extends through the coils 12a, 12b, 12c. In the embodiments of Fig. 2-5, the coils are wound directly onto the magnetostrictive conductor. In the embodiments of Fig. 7-8, the coils are arranged adjacent to the magnetostrictive conductor.

The sensor 1 further comprises a pulse generator 11, which is configured to generate a current pulse in the magnetostrictive conductor 10. As shown in Fig. 2, the pulse generator 11 is (electrically) connected to the magnetostrictive conductor 10, in order to allow the application of a current pulse to the magnetostrictive conductor 10.

The coils 12a, 12b, 12c are connected to a signal processing unit 13. The signal processing unit 13 is configured to measure voltage signals of the respective coils 12a, 12b, 12c, i.e. a time-resolved voltage signal output by the respective coils 12a, 12b, 12c. These voltage signals are used for the determination of the position of a magnet that is placed in the vicinity of the sensor 1, as will be described in the following.

Although not imperative (and not shown in Fig. 2), it is preferable that the pulse generator 11 is connected to the signal processing unit 13. Preferably, the signal processing unit 13 is configured to control the pulse generator 11 to generate a current pulse in the magnetostrictive conductor 10. This enables the signal processing unit 13 to trigger a position detection. Further preferably, the processing unit 13 is configured to monitor the current pulse generated by the pulse generator 11, since the voltage signals of the coils 12a, 12b, 12c required for the position detection are triggered by the current pulse generated by the pulse generator 11.

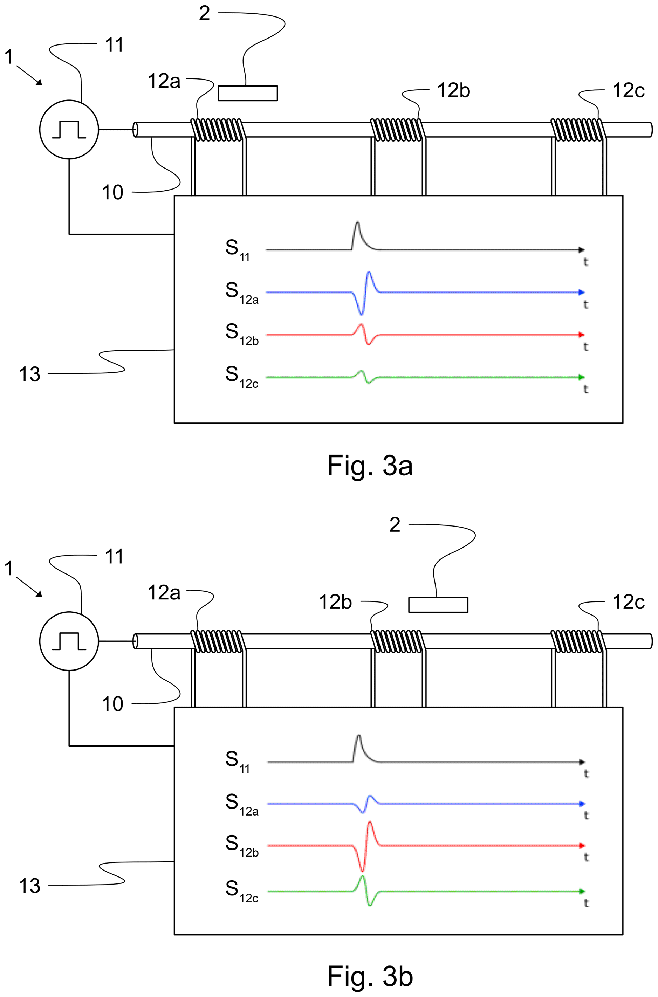

Fig. 3a to 3c schematically illustrate the operational principle of a sensor system according to an embodiment of the present invention. A magnet 2 is placed proximate to the sensor 1, wherein Fig. 3a-3c illustrate the magnet 2 in different positions relative to the sensor 1. A current pulse is applied to the magnetostrictive conductor 10 via the pulse generator 11. The current pulse triggers a voltage signal in the coils 12a, 12b, 12c, which is received by the signal processing unit 13 that is connected to the coils 12a, 12b, 12c. The pulse generator 11 is also connected to the signal processing unit 13, which also receives the current pulse applied to the magnetostrictive conductor 10 as a signal. The respective (time-dependent) signals received by the signal processing unit 13 are shown in the signal processing unit 13 in Fig. 3a-3c. The (time-dependent) signal corresponding to the current pulse of the signal generator 11 is designated with the reference sign S₁₁. The (time-dependent) voltage signals received from the coils 12a, 12b, 12c in response to the current pulse are designated with the reference signs S₁₂ₐ, S_{12b} and S_{12c}, respectively.

In Fig. 3a, the magnet 2 is located closest to coil 12a, on its right side. This yields a signal S₁₂ₐ from coil 12a with a higher amplitude than signal S_{12b} of coil 12b, which is located at a greater distance from the magnet 2 than coil 12a. The signal S_{12c} of coil 12c, which has the greatest distance from the magnet 2, has a smaller amplitude than signals S₁₂ₐ and S_{12b}. Furthermore, the phase of signal S₁₂ₐ is inverse to the phase of signals S_{12b} and S_{12c}, because the magnet 2 is located on the right-hand side of coil 12a, but on the left-hand side of coils 12b and 12c. The voltage signals S₁₂ₐ, S_{12b}, S_{12c} appear concurrently with the current signal S₁₁, since the current pulse triggers the induction of voltage in the coils 12a, 12b, 12c.

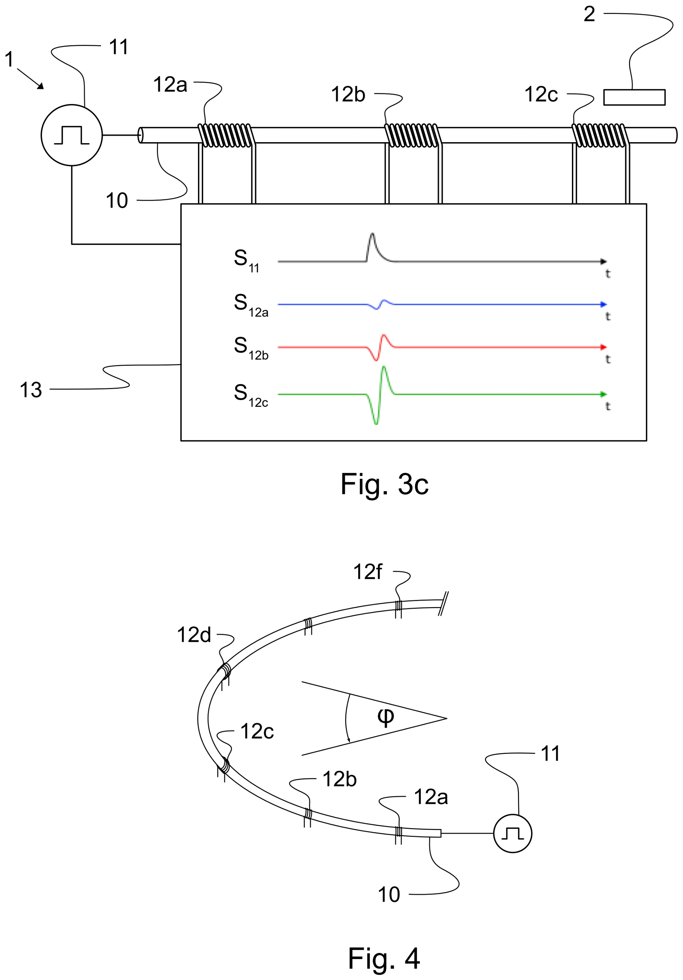

Based on the phase of the signals S₁₂ₐ, S_{12b} and S_{12c}, it can be determined on which side of the respective coils 12a, 12b and 12c the magnet is located, as described above for Fig. 3a. For Fig. 3b and 3c, analogous considerations apply - the phase of the voltage signals depends on whether the magnet 2 is located on the right-hand side or on the left-hand side of the coils.

Based on the amplitude of the signals S₁₂ₐ, S_{12b} and S_{12c}, the distance of the magnet 2 to the respective coils 12a, 12b and 12c can be determined. The smaller the distance between the magnet 2 and the coil, the larger the signal amplitude.

Based on the voltage signals of the coils, the position of the magnet 2 relative to the coils and, thus, the position of the magnet 2 relative to the sensor 1 can be determined with high accuracy by quantitative evaluation of the voltage signal amplitudes and phases.

The sensor (element) 1 described above can either be directly used as sensor 1, or form an element of a sensor comprising a plurality of these sensor elements 1. The sensor elements 1 can be assembled in a linear arrangement to form a sensor or sensor system with an increased stroke length. If multiple sensor elements 1 are combined into a sensor or sensor system, multiplexing may be employed to allow synchronized measure triggering by application of current pulses and readout of the coil voltages.

In a preferred embodiment, a sensor element 1 according to the configuration shown in Fig. 2 and 3a-3c comprises two coils with a respective winding number of 1000 and length of 20-30 mm wound around a magnetostrictive conductor with a length of 65 mm at a distance of 10 mm. Multiple of these elements may be combined to achieve stroke lengths that are multiples of 65 mm. In this context, it should be noted that the inventive sensor (element) is capable of measuring the position of a magnet that is disposed beyond the physical extension of the sensor (element) - the most distal coil on the sensor element still yields a signal even if the magnet is positioned beyond the distal extension of the sensor (element).Fig. 4 shows a schematic illustration of another embodiment of a sensor (element) 1 according to the present invention. In this variation, the magnetostrictive conductor 10 is not straight, but is provided in a bent configuration. In the embodiment shown in Fig. 4, the sensor (element) 1 has the shape of a circular segment that can be extended to any circular segment size, as indicated by the double-dashed line at the end of the magnetostrictive conductor 10.

Coils 12a, ..., 12f are positioned along the extension of the magnetostrictive conductor 10. This configuration allows the use of the sensor (element) 1 as rotary encoder, with the position of a magnet 2 disposed in the vicinity of the sensor (element) 1 indicating an angular position, as schematically indicated by the angle φ in Fig. 4.

Fig. 5 illustrates a method for calibrating a coil 12 of a sensor (element) 1. The calibration serves to determine a reference position of the coil 12 along the extension direction of the magnetostrictive conductor 10, i.e., a "zero point" of the coil 12 for later position measurements.

For the calibration, a magnet 2 is translated along the extension direction x of the magnetostrictive conductor 10 such that it passes the coil 12, as indicated by the broad arrow. During the movement of the magnet 2, the inductance L(x) of the coil 12 is measured in dependence of the position x of the magnet 2. The inductance varies with the position x of the magnet 2. In the center of the coil 12, the inductance L is at a minimum. When the magnet 2 is moved away from the center point of the coil 12, the inductance L increases up to a maximum value on any of the two sides of the coil 12.

The magnet-position-dependent evolution of the inductance L(x) resembles a parabolic shape. L(x) can be utilized to carry out a calibration or referencing procedure. This effect occurs without applying a current pulse to the magnetostrictive conductor 10. The calibration method relies on the magnetoelastic effect caused by the magnet 2 onto the magnetostrictive conductor 10.

Fig. 6 schematically depicts an embodiment of a sensor array 1' according to an embodiment of the present invention. The sensor array 1' comprises a plurality of magnetostrictive conductors 10a, 10b, 10c. on each magnetostrictive conductor 10a, 10b, 10c a plurality of coils 12a, 12b, ..., 12i is wound. Each coil 12a, 12b, ..., 12i is connected to a signal processing unit (not shown) which operates according to the same principles as described above with reference to Fig. 1-4. Based on the voltage signals of the coils 12a, 12b, ..., 12i that is triggered by the application of a current pulse to the magnetostrictive conductors 12a, 12b, 12c, the 2D position of a magnet 2 relative to the sensor array 1' can be determined.

Fig. 7 shows a variation of the sensor array 1' of Fig. 6 which operates according to the same principle but has a different physical configuration. The plurality of magnetostrictive conductors 10a, 10b, 10c is arranged below or within a substrate 3. As an example, the conductors 10a, 10b, 10c may be provided as circuit paths on a wafer acting as substrate 3, or may be molded into a substrate 3 made of a moldable material. The material for the substrate 3 is not particularly limited. The substrate 3 serves to provide a stable support for the elements of the sensor array 1'.Instead being wound around the magnetostrictive conductors 10a, 10b, 10c, the plurality of coils is provided as flat coils 10j, ..., 10r. The flat coils 10j, ..., 10r may, for example, be provided as PCB coils that are printed on the substrate 3.

In a further preferred variant of the embodiment of Fig. 6, the magnetostrictive conductors 10a, 10b, 10c may be arranged above the substrate 3 which supports the flat coils 10j, ..., 10r. This variation is schematically depicted in Fig. 8. The sensor array 1' according to the configuration of Fig. 8 is particularly simple to manufacture, whilst providing a stable and robust sensor configuration that is insensitive to external mechanical or environmental impacts.

The above sensor (element)s 1 and sensor (element) arrays 1' can also be used to measure the position of more than one magnet simultaneously.

Measurements of magnet positions performed with the sensor elements, sensors and sensor systems as described above are triggered by the application of a current pulse to the magnetostrictive conductor(s) 10 and measurement of the voltage signals at the coils 12. The applied current pulses preferably have a current amplitude of 1 to 5 A, more preferably 1 to 3 A, more preferably 1.5 to 2.5 A, more preferably 2 A. The current pulse duration preferably ranges between 0.5 and 5 µs. For the measurements, both DC and AC pulses can be applied.

The application of AC current pulses has particular advantage. The interaction of the current pulse with the magnet's field exerts a force on the magnet, the direction of which is dependent on the sign of the applied current. The use of AC pulses with equal amplitude of positive and negative component compensates the magnet movement induced by the current pulse.

The use of AC current pulses furthermore allows the measurement of the speed of a magnet moving along the magnetostrictive conductor of a sensor (element). As explained above, the amplitude of the voltage signal measured in a coil of the inventive sensor (element)s depends on the distance between the coil and the magnet. Applying an AC current pulse with a defined time difference between positive and negative pulse component allows the measurement of the distance the magnet moved during the time difference between the positive and negative pulse components, because the voltage amplitudes measured at the coil will vary according to the changed position due to the movement and speed.

Velocity measurements can also be performed by applying a plurality of current pulses at predetermined time intervals and determining the magnet displacement between subsequent current pulses. Furthermore, the inventive sensor concept allows the continuous measurement of magnet positions by applying current pulses periodically. For continuous measurements, current pulses with a duration of 0.5 µs to 2 µs, preferably 1 µs at a frequency of 100 kHz to 500 kHz, preferably 200 kHz may be applied.

### List of reference signs

- 1: sensor
- 1': sensor array
- 10, 10a, 10b, 10c: magnetostrictive conductor
- 11: current pulse generator
- 12a-12i: coil
- 12j-12r: flat coils
- 13: signal processing unit
- S₁₁: current signal (of current pulse generator)
- S₁₂ₐ, S_{12b}, S_{12c}: voltage signals (of coils)
- 2: magnet
- 3: substrate

## Claims

1. Sensor element (1) for detecting a position of a magnet (2) relative to the sensor element (1), the sensor element (1) comprising:
• a magnetostrictive conductor (10), preferably a magnetostrictive wire, adjacent to which a magnet (2) is placeable;
• a current pulse generator (11) which is configured to generate a current pulse in the magnetostrictive conductor (10);
• one or more coils (12a, 12b, 12c) that are arranged adjacent to the magnetostrictive conductor (10) or wound around the magnetostrictive conductor (10); and
• a signal processing unit (13) configured to measure a respective voltage signal of the one or more coils (12a, 12b, 12c), the voltage signal being triggered by the current pulse in the magnetostrictive conductor (10).

2. Sensor element (1) according to claim 1, wherein the signal processing unit (13) is configured to determine the position of the magnet (2) relative to the sensor element (1), in particular relative to the coils (12a, 12b, 12c), based on the measured voltage signals of the coils (12a, 12b, 12c).

3. Sensor element (1) according to claim 1 or 2, wherein the pulse generator (11) is configured to generate a direct current or alternating current pulse with a duration of 0.5 µs to 5 µs, and/or an amplitude of 1 A to 3 A.

4. Sensor element (1) according to any of the preceding claims,
wherein a distance between adjacent coils (12a, 12b, 12c) on the magnetostrictive conductor (10) is 60 mm or less, preferably 40 mm or less; and/or
wherein the one or more coils (12a, 12b, 12c) are wound directly on the magnetostrictive conductor (10); and/or
wherein the one or more coils (12a, 12b, 12c) contain 5 turns or more, more preferably 10 turns or more, more preferably 100 turns or more, more preferably 1500 turns or more.

5. Sensor element (1) according to one of the preceding claims, wherein a dampening resistor is connected in parallel to at least one, preferably to each of, the coils (12a, 12b, 12c).

6. Sensor element (1) according to any of the preceding claims, comprising a guiding element along which the magnet (2) is movable in a guided manner, the guiding element being configured and arranged such that the magnet (2) is movable in a direction essentially parallel, preferably parallel, to the magnetostrictive conductor (10).

7. Sensor element (1) according to any of the preceding claims, wherein the magnetostrictive conductor (10) is arranged in a straight configuration, or a bent, preferably circular segment, configuration.

8. Sensor element array (1') for detecting a position of a magnet (2) relative to the sensor element array (1'), the sensor array (1') comprising:
• a plurality of magnetostrictive conductors (10a, 10b, 10c), preferably constituted by magnetostrictive wires, preferably arranged in parallel to each other or in an array, adjacent to which a magnet (2) is placeable;
• a current pulse generator (11) which is configured to generate a current pulse in the magnetostrictive conductors (10a, 10b, 10c);
• a plurality of coils (12a, 12b, ..., 12i) which are arranged adjacent to the magnetostrictive conductors (10a, 10b, 10c) or wound around the magnetostrictive conductors (10a, 10b, 10c), wherein each magnetostrictive conductor (10a, 10b, 10c) comprises at least one coil (12a, 12b, ..., 12i); and
• a signal processing unit (13) configured to measure a respective voltage signal of the plurality of coils (12a, 12b, ..., 12i), the voltage signal being triggered by the current pulse in the magnetostrictive conductors (10a, 10b, 10c).

9. Sensor element array (1') according to claim 8, wherein the signal processing unit (13) is configured to determine the position of the magnet (2) relative to the sensor array (1'), particularly preferably relative to the coils (12a, 12b, ..., 12i), based on the measured voltage signals of the coils (12a, 12b, ..., 12i).

10. Sensor system for detecting a position of one or more magnets (2) relative to a sensor element (1) or a sensor element array (1'), the system comprising at least one sensor element (1) according to any of claims 1 to 7 and/or a sensor element array (1') according to claim 8 or 9, and one or more magnets (2) that is/are disposable in the vicinity of the at least one sensor element (1) and/or the at least one sensor array (1') and whose position is detectable with the at least one sensor element (1) and/or the at least one sensor array (1').

11. Sensor system according to claim 10, wherein the plurality of coils is configured as flat coils (12j, ..., 12r) that are arranged on a substrate (3), preferably configured as PCB coils that are printed on the substrate (3).

12. Method for determining a position of a magnet (2) relative to a sensor element (1) according to any of claims 1 to 7, relative to a sensor element array (1') according to claim 9 or 10, or a sensor system according to claim 10 or 11, the method comprising:
• placing a magnet (2) in the vicinity of the sensor element (1), the sensor element array (1') or the sensor system, particularly in the vicinity of the magnetostrictive conductor (10) or the magnetostrictive conductors (10a, 10b, 10c);
• generating a current pulse in the magnetostrictive conductor (10) or in the magnetostrictive conductors (10a, 10b, 10c);
• measuring a respective voltage signal of the coils (12a, 12b, 12c) of the sensor element (1), the coils (12a, 12b, ..., 12i) of the sensor element array (1') or the coils of the sensor system;
• determining the position of the magnet (2) relative to the sensor element (1), the sensor element array (1') or the sensor system based on the measured voltage signals of the coils (12a, 12b, 12c).

13. Method according to claim 12, wherein the determination of the position of the magnet (2) takes into account the amplitude, the phase, the amplitude difference, and/or the phase difference of the measured voltage signals of the coils (12a, 12b, 12c).

14. Method according to claim 12 or 13, wherein the current pulse has a current of 1-5 A, and/or a pulse width of 0.5 - 5 µs, and/or wherein the current pulse is a DC pulse or an AC pulse, and/or wherein the current pulse is applied periodically, preferably with a frequency of 10 Hz to 500 kHz.

15. Method for calibrating a sensor element (1) according to any of claims 1 to 7, a sensor element array (1') according to claim 8 or 9, or a sensor system according to claim 10 or 11, the method comprising:
• measuring the inductance of a coil (12a, 12b, 12c, ...) whilst translating a magnet (2) along the magnetostrictive conductor (10) such that it passes the coil (12a, 12b, 12c, ...);
• determining a position of the magnet (2) at which a minimum inductance of the coil (12a, 12b, 12c, ...) is measured as a reference position of the coil (12, 12b, 12c, ...) on the magnetostrictive conductor (10).
